# EUROPÄISCHE PATENTSCHRIFT

(11) **EP 0 505 019 B1**
(45) Veröffentlichungstag und Bekanntmachung des Hinweises auf die Patenterteilung: **09.08.1995**
(21) Anmeldenummer: 92250065.7
(22) Anmeldetag: 20.03.1992
(51) Int. Cl.: F16H 55/30

(54) **Zahnkettenrad**
Toothed chain wheel
Roue à chaîne dentée

(30) Priorität: 22.03.1991 DE 9103725 U
(43) Veröffentlichungstag der Anmeldung: 23.09.1992
(73) Patentinhaber: RUD-Kettenfabrik Rieger & Dietz GmbH u. Co., D-73406 Aalen (DE)
(72) Erfinder: Dalferth, Hans, Dipl.-Ing. (FH), W-7080 Aalen-Wasseralfingen (DE); Styrnol, Manfred, W-7082 Oberkochen (DE); Zenker, Hartwig, W-7080 Aalen-Ebnat (DE); Maier, Horst, W-7082 Oberkochen (DE); Bogdan, Zvonimir, Dipl.-Ing. (FH), W-7080 Aalen (DE)
(74) Vertreter: Böning, Manfred, Dr.-Ing.

(56) Entgegenhaltungen:
- DD-A- 244 609
- DE-A- 2 832 709
- DE-B- 1 273 915

## Beschreibung

Die Erfindung betrifft ein Kettenrad mit Zähnen zum Einleiten von Antriebskräften in die Buge von das Kettenrad passierenden Vertikalgliedern einer Rundstahlkette, bei dem beidseits eines jeden Zahnes zur Abstützung der Längsschenkel des den jeweiligen Zahn umfassenden Horizontalgliedes dienende Stützflächen angeordnet sind.

Aus der DE-PS 12 73 915 ist ein Kettenrad der in Betracht gezogenen Art bekannt, dessen Teilkreisdurchmesser die die Schenkel der Horizontalglieder abstützenden Teile der Zähne bestimmen. Bei diesem Kettenrad weist die Zahnbrust eines jeden Zahnes einen Krümmungsradius auf, der größer ist als der Krümmungsradius der jeweils gegen die Zahnbrust anliegenden Buge der Vertikalglieder, so daß es zwischen Zahnbrust und Vertikalglied im wesentlichen zu einer verschleißfördernden Punktberührung kommt.

Bei einem aus dem DE-GM 19 43 689 bekannten anderen Zahnkettenrad erfolgt die Abstützung der Rundgliederkette einzig und allein über die Vertikalglieder, d.h. es wird auf eine Abstützung der Horizontalglieder verzichtet und statt dessen der Teilkreis des Zahnrades durch die Vertikalglieder bestimmt, deren Längsschenkel partiell von Stützflächen der Zähne untergriffen werden.

Ein Kettenrad, bei dem ebenfalls nur die Vertikalglieder abgestützt werden, ist auch aus der DE-AS 12 56 964 bekannt. Dieses Kettenrad ist zwecks Vereinfachung seiner Herstellung mit auswechselbaren Kettenzähnen ausgestattet.

Die beschriebenen, zur Vermeidung von Überbestimmungen nur alternativ zum Einsatz gelangenden Möglichkeiten der Gliedabstützung vermögen hinsichtlich der Standzeit sowohl der Kettenräder als auch der von ihnen angetriebenen Ketten nicht voll zu befriedigen. Der Erfindung liegt die Aufgabe zugrunde, ein Kettenrad zu schaffen, das bei einfacher Herstellbarkeit unabhängig von seiner Drehrichtung eine günstige Kraftübertragung zwischen den Zähnen des Kettenrades und den Vertikalgliedern gewährleistet und zu einer spürbaren Erhöhung der Standzeit führt. Diese Aufgabe wird erfindungsgemäß dadurch gelöst, daß jeder Zahn eine gegen den Bug des jeweils angetriebenen Vertikalgliedes anliegende Zahnbrust mit einem Krümmungsradius aufweist, der gleich dem Krümmungsradius des Buges ist, und daß sich an die Zahnbrust eine den Längsschenkel des angetriebenen Vertikalgliedes abstützende Stützfläche anschließt, deren Länge kleiner als die halbe Länge des Vertikalgliedes ist, daß der Zahnrücken eines jeden Zahnes in gleicher Weise mit einer sich an ihn anschließenden Stützfläche versehen ist wie die Zahnbrust und daß die Zähne als derart mit einem Radkörper verbundene Einzelzähne ausgebildet sind, daß sich beim Vor- und Rücklauf des Rades jeweils nur der in Bewegungsrichtung hintere Bug der Vertikalglieder abstützt.

Bei Versuchseinsätzen mit dem erfindungsgemäßen Kettenrad hat sich gezeigt, daß bei Einhaltung enger Fertigungstoleranzen wider Erwarten die "Überbestimmung des Teilkreises" durch eine satte Abstützung sowohl der Horizontal- als auch der Vertikalglieder weder hinsichtlich der in den Kettengliedern auftretenden Spannungen störend in Erscheinung tritt noch den Einlauf der Glieder in das Kettenrad beeinträchtigt, daß aber wohl eine überraschend große Standzeiterhöhung der Kettenräder in der Größenordnung von 30% erreichbar ist.

Weitere Einzelheiten und Merkmale der Erfindung ergeben sich aus den Unteransprüchen der nachstehenden Beschreibung eines in der beigefügten Zeichnung dargestellten bevorzugten Ausführungsbeispieles. Es zeigen:
- Fig. 1: die Teilseitenansicht eines Zahnkettenrades,

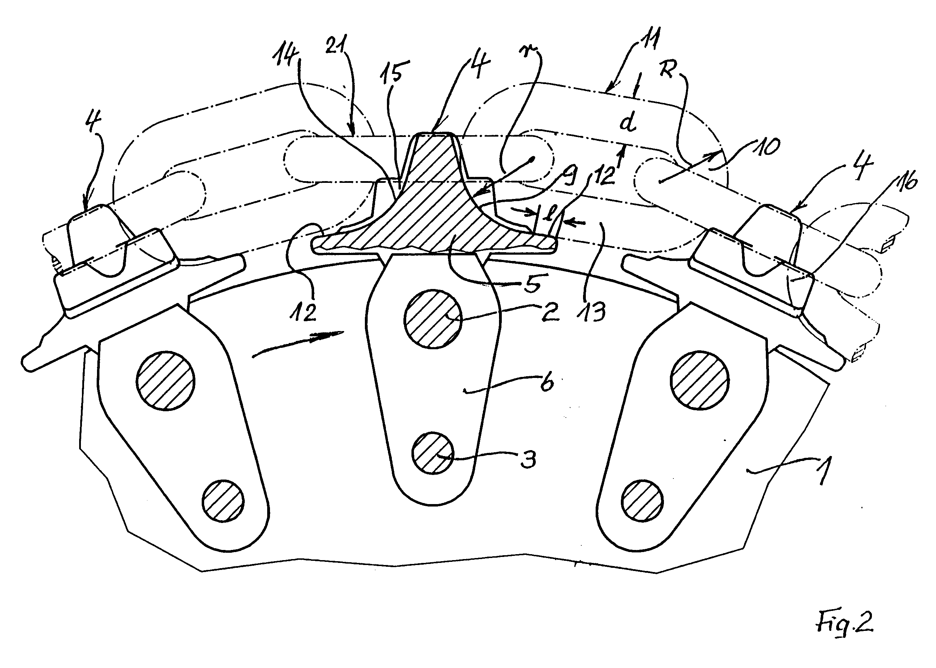

- Fig. 2: teilweise im Schnitt in vergrößertem Maßstab die Anlageverhältnisse zwischen den Zähnen des Zahnkettenrades gemäß Fig. 1 und den von diesem Kettenrad angetriebenen Gliedern einer Rundstahlkette,
- Fig. 3: die Seitenansicht eines einzelnen Zahnes des Zahnkettenrades gemäß den Figuren 1 und 2 und
- Fig. 4: einen Schnitt durch den Zahn gemäß Fig. 3 längs der Linie IV-IV.

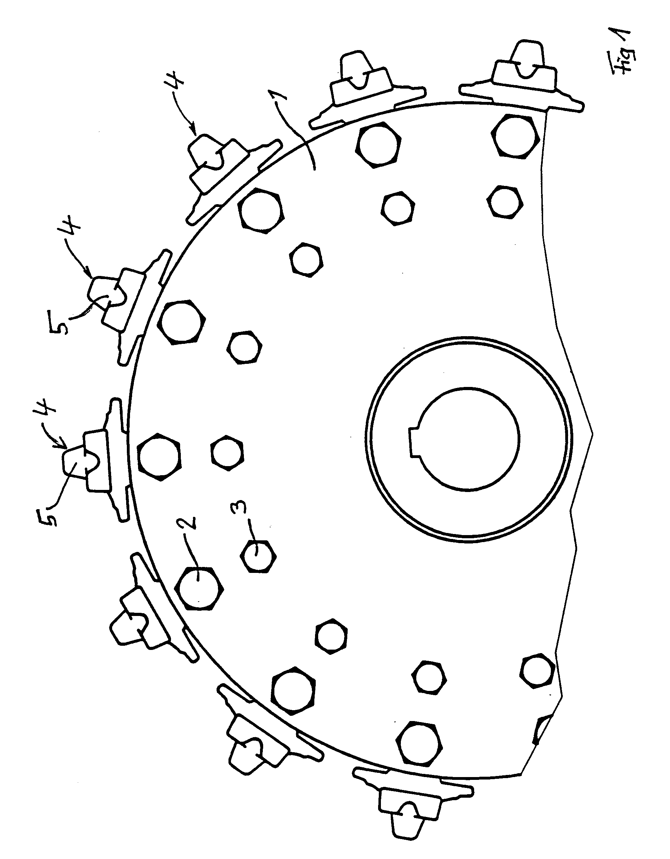

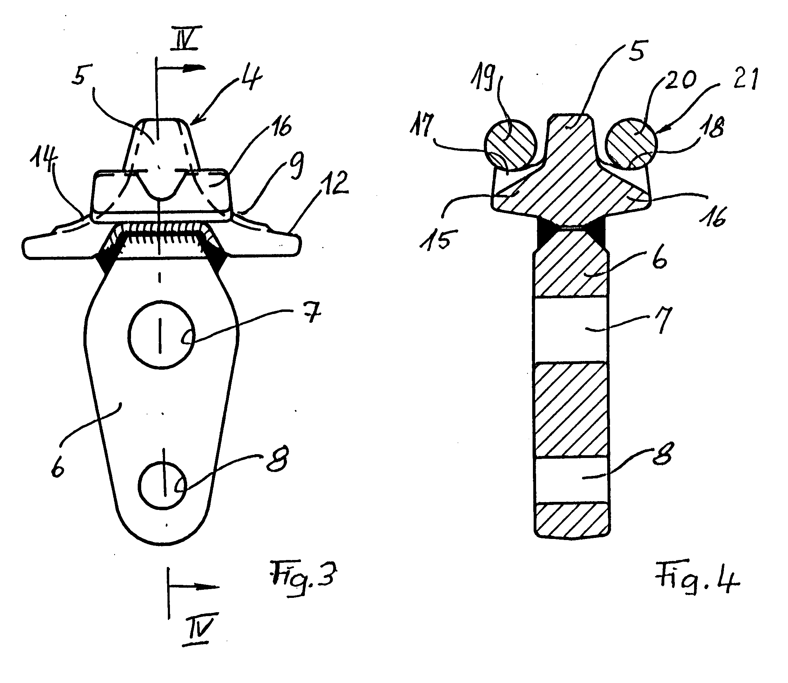

In Figur 1 ist 1 der Radkörper eines Zahnrades, an dem mit Hilfe jeweils zweier Schrauben 2 und 3 eine Vielzahl von Zähnen 4 befestigt ist. Jeder Zahn 4 besteht, wie am besten aus den Figuren 3 und 4 erkennbar ist, aus einem als Gesenkschmiedeteil ausgebildeten Zahnkopf 5 und einem Zahnfuß 6 mit Bohrungen 7 und 8 für die Befestigungsschrauben 2 bzw. 3. Der Zahnkopf 5 ist mit dem Zahnfuß 6 durch Schweißen verbunden. Die Verwendung von Einzelzähnen erleichtert nicht nur die Herstellung des Kettenrades, sondern sie erlaubt auch ein Wenden der Zähne in Fällen, in denen eine Zahnflanke infolge nur einseitiger Zahnbelastung bei in nur eine Richtung drehenden Rädern unerwünscht starke Verschleißerscheinungen zeigt.

Jeder Zahnkopf 5 weist eine Zahnbrust 9 mit einem Krümmungsradius r auf, der dem Krümmungsradius R des Buges 10 eines Vertikalgliedes 11 entspricht. Die gekrümmte Zahnbrust 9 geht in eine gerade Stützfläche 12 über, die den ihr zugewandten Längsschenkel 13 des Vertikalgliedes 11 abstützt. Die LÄnge 1 der Stützfläche 12 sollte kleiner als 75% der Nenndicke d des Vertikalgliedes 11 sein. Die Zahnbrust 9 selbst ist muldenförmig ausgebildet, so daß eine satte Anlage zwischen dem Bug 10 und dem Zahn 4 im Bereich der Zahnbrust 9 gewährleistet ist. Um einen drehrichtungsunabhängigen Einsatz des Kettenrades zu ermöglichen, ist der Zahnrücken 14 eines jeden Zahnes 4 in gleicher Weise ausgebildet wie die Zahnbrust 9.

Jeder Zahnkopf 5 weist, wie aus Figur 4 erkennbar ist, zwei flügelartig nach außen stehende Vorsprünge 15 und 16 auf, von denen ein jeder mit Längsführungsmulden 17 und 18 für die Längsschenkel 19 und 20 eines Horizontalgliedes 21 versehen ist.

Aufgrund der geschilderten Ausbildung der Zähne 4 des Zahnrades und der Abstimmung der Abmessungen dieser Zähne auf die Form der Kettenglieder der Rundgliederkette wird eine gleichmäßige Kraftübertragung zwischen den Kettengliedern und den Zähnen erreicht. Anders als bei bekannten Zahnrädern kommt es nicht zu den nachteiligen punktuellen, d.h. auf bestimmte Stellen konzentrierten, ein vorzeitiges Standzeitende bewirkenden Verschleißerscheinungen.

## Patentansprüche

1. Kettenrad mit Zähnen (4) zum Einleiten von Antriebskräften in die Buge (10) von das Kettenrad passierenden Vertikalgliedern (11) einer Rundstahlkette, bei dem beidseits eines jeden Zahnes (4) zur Abstützung der Längsschenkel (19,20) des den jeweiligen Zahn (4) umfassenden Horizontalgliedes (21) dienende Stützflächen angeordnet sind, dadurch **gekennzeichnet**, daß jeder Zahn (4) eine gegen den Bug (10) des jeweils angetriebenen Vertikalgliedes (11) anliegende Zahnbrust (9) mit einem Krümmungsradius (r) aufweist, der gleich dem Krümmungsradius (R) des Buges (10) ist, und daß sich an die Zahnbrust (9) eine den Längsschenkel (13) des angetriebenen Vertikalgliedes (11) abstützende Stützfläche (12) anschließt, deren Länge kleiner als die halbe Länge des Vertikalgliedes (11) ist, daß der Zahnrücken (14) eines jeden Zahnes (4) in gleicher Weise mit einer sich an ihn anschließenden Stützfläche (12) versehen ist wie die Zahnbrust (9) und daß die Zähne (4) als derart mit einem Radkörper (1) verbundene Einzelzähne ausgebildet sind, daß sich beim Vor- und Rücklauf des Rades jeweils nur der in Bewegungsrichtung hintere Bug der Vertikalglieder (11) abstützt.

2. Kettenrad nach Anspruch 1, dadurch gekennzeichnet, daß die Länge (1) der Stützfläche (12) kleiner als 75% der Nenndicke (d) des Vertikalgliedes (11) ist.

3. Kettenrad nach Anspruch 1 oder 2, dadurch gekennzeichnet, daß die die Horizontalglieder (21) und die Buge (10) der Vertikalglieder (11) abstützende Zonen der Zähne (4) als Längsführungsmulden (17,18) für die Glieder (11,21) ausgebildet sind.

4. Kettenrad nach einem der Ansprüche 1 bis 3, dadurch gekennzeichnet, daß jeder Zahn (4) aus einem gesenkgeschmiedeten Zahnkopf (5) und einem mit diesem durch Schweißen verbundenen Zahnfuß (6) besteht.

## Claims

1. Chain wheel having teeth (4) for inducing drive forces in the nose ends (10) of vertical members (11), passing the chain wheel, of a round steel chain, in which on both sides of each tooth (4) there are disposed supporting faces serving to support the longitudinal legs (19, 20) of the horizontal member (21) embracing the respective tooth (4), characterized in that each tooth (4) exhibits a tooth face (9) bearing against the nose end (10) of the respectively driven vertical member (11) and having a radius of curvature (r) equal to the radius of curvature (R) of the nose end (10), and in that the tooth face (9) is adjoined by a supporting face (12) which supports the longitudinal leg (13) of the driven vertical member (11) and the length of which is less than half the length of the vertical member (11), in that the tooth back (14) of each tooth (4) is provided with a thereto adjoining supporting face (12) in the same way as the tooth face (9), and in that the teeth (4) are configured as individual teeth connected in such a way to a wheel body (1) that, upon the forward travel and return travel of the wheel, only the rear nose end of the vertical members (11), in the direction of motion, is respectively supported.

2. Chain wheel according to Claim 1, characterized in that the length (1) of the supporting face (12) is less than 75% of the nominal thickness (d) of the vertical member (11).

3. Chain wheel according to Claim 1 or 2, characterized in that those zones of the teeth (4) which support the horizontal members (21) and the nose ends (10) of the vertical members (11) are configured as longitudinal guide recesses (17, 18) for the members (11, 21).

4. Chain wheel according to one of Claims 1 to 3, characterized in that each tooth (4) comprises a drop-forged tooth head (5) and a tooth base (6) connected thereto by welding.

## Revendications

1. Roue à chaîne, comprenant des dents (4) destinées à transmettre des efforts d'entraînement aux arceaux (10) de maillons verticaux (11), adaptés à la roue à chaîne, d'une chaîne en acier rond, dans laquelle il est prévu, de chaque côté de chaque dent (4), des surfaces d'appui servant à supporter les branches longitudinales (19, 20) du maillon horizontal (21) qui entoure la dent respective (4), caractérisée en ce que chaque dent (4) comporte un front de dents (9) qui s'applique contre l'arceau (10) du maillon vertical entraîné (11) correspondant et dont le rayon de courbure (r) est égal à celui (R) de l'arceau (10), et en ce qu'au front de dents (9) se raccorde une surface d'appui (12) qui supporte la branche longitudinale (13) du maillon vertical entraîné (11) et dont la longueur est inférieure à la moitié de celle du maillon vertical (11), en ce que le dos (14) de chaque dent (4) est réalisé de la même manière que le front de dent (9), avec une surface d'appui (12) qui s'y raccorde, et en ce que les dents (4) sont réalisées sous la forme de dents individuelles reliées à un corps (1) de la roue de telle manière que, lors de la rotation de la roue vers l'avant et vers l'arrière, seul l'arceau arrière des maillons verticaux (11), en considérant le sens du mouvement, soit supporté.

2. Roue à chaîne suivant la revendication 1, caractérisée en ce que la longueur (l) des surfaces d'appui (12) est inférieure à 75% de l'épaisseur nominale (d) du maillon vertical (11).

3. Roue à chaîne suivant la revendication 1 ou 2, caractérisée en ce que les zones des dents (4) qui supportent les maillons horizontaux (21) et les arceaux (10) des maillons verticaux (11) sont réalisés sous la forme d'évidements (17, 18) de guidage longitudinal pour les maillons (11, 21).

4. Roue à chaîne suivant l'une des revendications 1 à 3, caractérisée en ce que chaque dent (4) est constituée d'une tête de dent (5) réalisée par estampage et d'un pied de dent (6) relié à cette tête par soudage.
